# EUROPÄISCHE PATENTSCHRIFT

(11) **EP 1 222 836 B1**
(45) Veröffentlichungstag und Bekanntmachung des Hinweises auf die Patenterteilung: **04.01.2006**
(21) Anmeldenummer: 00972600.1
(22) Anmeldetag: 27.09.2000
(51) Int. Cl.: H04Q 9/00, G08C 17/02

(54) **SYSTEM ZUM AUSTAUSCH VON DATEN**
SYSTEM FOR EXCHANGING DATA
SYSTEME POUR L'ECHANGE DE DONNEES

(30) Priorität: 28.09.1999 DE 19946534
(43) Veröffentlichungstag der Anmeldung: 17.07.2002
(73) Patentinhaber: Common-Link AG, 76189 Karlsruhe (DE)
(72) Erfinder: SCHLÄFER, Wolfgang, D-76448 Durmersheim (DE)
(74) Vertreter: Dimmerling, Heinz
(86) Internationale Anmeldenummer: PCT/DE2000/003372
(87) Internationale Veröffentlichungsnummer: WO 2001/024569

(56) Entgegenhaltungen:
- EP-A- 0 629 098
- EP-A- 0 847 163
- WO-A-98/19447
- WO-A-99/13676
- US-A- 5 010 568
- US-A- 5 161 182

## Beschreibung

Die Erfindung betrifft ein Verfahren sowie ein System zum Austausch von Daten zwischen einem Endgerät und einem Benutzergerät.

Ein derartiges Verfahren beziehungsweise System ist beispielsweise aus der Fernwirktechnik bekannt. Die Fernwirktechnik umfaßt das Überwachen und Steuem räumlich entfernter Objekte. So umfaßt die Fernwirktechnik beispielsweise die Meldung von Schaltzuständen, das Erfassen von Meßwerten und Zählerständen oder der Erteilung von Schaltbefehlen in der elektrischen Energieversorgung.

Bei den bekannten Verfahren beziehungsweise Systemen wird zwischen einem Benutzergerät und dem zu überwachenden oder zu steuemden Endgerät eine Verbindung aufgebaut. Je nach Art der Überwachung beziehungsweise Steuerung muß die Verbindung ständig zwischen dem Benutzergerät und dem Endgerät bestehen. Denn in bestimmten Fällen ist es erforderlich, daß Zustände des Endgerätes unverzüglich an das Benutzergerät weitergeleitet werden. Die hierdurch erforderliche ständige Verbindung zwischen dem Benutzergerät und dem Endgerät wirkt sich nachteilig auf die Kosten aus.

Des weiteren müssen das Endgerät und das Benutzergerät aufeinander abgestimmt sein. Es ist in der Regel nicht möglich, mit einem Benutzergerät eine Vielzahl unterschiedlicher Typen von Endgeräten zu überwachen. Insofern ist das bekannte System inflexibel.

Darüber hinaus ist es bei dem bekannten Verfahren beziehungsweise System nicht möglich, mit dem Benutzergerät problemlos einen Ortswechsel vorzunehmen. Denn bei dem bekannten verfahren beziehungsweise System sind für das Endgerät und das Benutzergerät besondere Schnittstellen erforderlich, was zur Folge hat, daß beispielsweise das Benutzergerät nur dort zum Einsatz kommen kann, wo eine derartige Schnittstelle vorhanden ist. Ähnliches gilt auch für die Endgeräte.

Aus der WO-A2-9913676 ist ein System zum Austausch von Daten bekannt, bei welchem mehrere zu überwachende Geräte mit Daten-Sammelgeräten verbunden sind. Die Verbindung der zu überwachenden Geräte mit den Daten-Sammelgeräten geschieht jeweils mittels einer Telemetrieverbindung, wobei vorgesehen ist, daß ein zu überwachendes Gerät mit verschiedenen Daten-Sammelgeräten verbunden sein kann. Die Telemetrieverbindung wird mittels Funkgeräte hergestellt.

Die Daten-Sammelgeräte ihrerseits sind mit einer übergeordneten Steuerung verbunden. Die Verbindung der Daten-Sammelgeräte mit der übergeordneten Steuerung geschieht im Gegensatz zu der Telemetrieverbindung der zu überwachenden Geräte mit den Daten-Sammelgeräten mittels eines öffentlichen Netzes.

Die übergeordnete Steuerung kann des weiteren mittels eines öffentlichen Netzes von Benutzergeräten erreicht werden.

Darüber hinaus ist aus der WO-A-9819447 ein System zum Austausch von Daten mit sogenannten "Data Collection Device" bekannt. Der Druckschrift lassen sich mehrere Arten der Anbindung der "Data Collection Device" entnehmen. So läßt sich der Druckschrift auch die Anbindung der Data Collection Device mittels eines Datenmodems an ein öffentliches Telefonnetz entnehmen.

Des weiteren sind aus der US-A-5010568 sowie US-A-5161182 Systeme bekannt, bei welchen die Anbindung von Endgeräten über ein öffentliches Telefonnetz erfolgt.

Es ist Aufgabe der Erfindung, ein verfahren beziehungsweise ein System zum Austausch von Daten zur Verfügung zu stellen, mittels dem Endgeräte auf einfache Weise mittels Benutzergeräte überwacht werden können, wobei die Benutzergeräte und die Endgeräte örtlich flexibel benutzbar sind.

Die Lösung dieser Aufgabe ergibt sich aus den Merkmalen des Anspruchs 1. Vorteilhafte Weiterbildungen der Erfindung ergeben sich aus den Unteransprüchen.

Gemäß der Erfindung weist ein Verfahren zum Austausch von Daten in einem Netzmark wenigstens ein Teleservioe-Endgerät und wenigstens ein Benutzergerät auf, welches mit dem Teleservice-Endgerät Daten austauschen kann. Das erfindungsgemäße Verfahren weist ferner eine Zentrat-Steuereinheit auf, welche wenigstens einen Zugang zu einem öffentlichen Kommunikationsnetz hat, und mit einem der Benutzergeräte, welches ein Endgerät des Kommunikationsnetzes ist, verbindbar ist. Des weiteren ist wenigstens eine Unter-Steuereinheit vorhanden, welche einerseits mit dem Teleservice-Endgerät und andererseits mit der Zentral-Steuereinheitverbindbar ist. Das Teleservice-Endgerät übermittelt aufgrund eines Ereignisses entsprechende vorbestimmte Daten an eine der Unter-Steuereinheiten. Die Unter-Steuereinheiten weisen jeweils eine erste Tabelle auf, mittels der eine erste Bewertung der Daten stattfindet. Die Daten werden in Abhängigkeit der ersten Bewertung an die Zentral-Steuereinheit weitergeleitet. In der Zentral-Steuereinheit findet mittels einer zweiten Tabelle eine zweite Bewertung statt, aufgrund der die Daten an ein vorbestimmtes Benutzergerät weitergeleitet werden.

Durch das erfindungsgemäße Verfahren beziehungsweise System lassen sich auf einfache Weise entfernt angeordnete Geräte überwachen und steuern. Hierzu wird ein zu überwachendes Gerät beziehungsweise eine zu überwachende Anlage mit einem Teleservice-Endgerät verbunden. Es braucht lediglich eine Anpassung zwischen dem Teleservice-Endgerät und dem zu überwachenden Gerät vorgenommen werden. Der Anschluß des Teleservice-Endgeräts mit dem erfindungsgemäßen System ist standardisiert. Hierdurch können beliebige zu überwachende Geräte an das System angeschlossen werden. Dadurch, daß Teleservioe-Endgeräte wesentlich preiswerter als Personal Computer hergestellt werden können, läßt sich die Überwachung eines Geräts mit dem erfindungsgemäßen System sehr kostengünstig realisieren.

Durch die Teleservice-Endgeräte ist das System vollständig unabhängig von dem zu überwachenden Gerät, weshalb selbst ein Totalausfall des zu überwachenden Geräts sicher diagnostiziert werden kann. Durch die durch die Endgeräte erfolgte Standardisierung des Verbindungsaufbaus ist eine Kommunikation über einen Telefonanschluß möglich und unabhängig von dem zu überwachenden Gerät. Des weiteren lassen sich zu überwachende Geräte auf einfache Weise in das System einbinden. Durch die Kommunikation über einen Telefonanschluß lassen sich insbesondere fernab jeglicher Infrastruktur stehende Geräte mittels eines Funktelefons in das System einbinden.

Da durch das erfindungsgemäße Verfahren beziehungweise System die Kommunikation der Teleservice-Endgeräte mit einem Benutzergerät ereignisgesteuert ist, entstehen nur geringe Verbindungskosten. Dennoch ist das zu überwachende Gerät ständig unter Kontrolle.

Dadurch, daß die Benutzergeräte Endgeräte eines öffentlichen Kommunikationsnetzes sind, kann ein Benutzer sehr flexibel auf ein Teleservice-Endgerät zugreifen. Ist das Benutzergerät beispielsweise ein Funktelefon, ist der Benutzer nicht mehr ortsgebunden. Gleichzeitig kann ein Benutzer auch bestimmen, daß beispielsweise automatische Meldungen bestimmter Teleservice-Endgeräte an ein bestimmtes Benutzergerät wie beispielsweise ein Telefax geleitet werden. Befindet sich das Telefax beispielsweise in einer Servicestation, können entsprechend der Meldung umgehend erforderliche Maßnahmen ergriffen werden.

Durch eine Vermaschung der Teleservice-Endgeräte mit den Unter-Steuereinheiten und eine Vermaschung der Unter-Steuereinheiten sowie der Teleservice-Endgeräte untereinander entsteht ein Netzwerk, welches eine hohe Verfügbarkeit gewährleistet und sehr flexibel ist.

Durch den Aufbau des erfindungsgemäßen Systems ist gewährleistet, daß Unbefugte nicht mit den Teleservice-Endgeräten in Verbindung treten können. Denn dadurch, daß die Benutzergeräte nur auf die Zentral-Steuereinheit zugreifen können, ist ein direkter Zugriff der Benutzergeräte auf die Teieservice-Endgeräte nicht möglich. In der Zentral-Steuereinheit kann die Berechtigung eines Benutzers geprüft werden, woraufhin veranlaßt wird, daß ein betreffendes Teleservice-Endgerät mit dem Benutzergerät in Verbindung tritt. Damit Unbefugte nicht mit einem Teleservice-Endgerät in Verbindung treten können, wird ein ankommender Verbindungswunsch dahingehend überprüft, ob der Ruf von einer Unter-Steuereinheit oder der Zentral-Steuereinheit kommt.

Durch die in der Unter-Steuereinheit vorhandene erste Tabelle lassen sich Daten sammeln, so daß bei einem Verbindungsaufbau der betreffenden Unter-Steuer-einheit mit der Zentral-Steuereinheit eine Vielzahl von Daten übermittelt werden kann. Die Verbindung der Unter-Steuereinheit mit der Zentral-Steuereinheit findet ebenso wie die anderen Verbindungen über ein öffentliches Netz, wie beispielsweise das Telefonnetz der Deutschen Telekom statt. Besonders vorteilhaft auf die Verbindungskosten wirkt sich aus, daß bei einem Verbindungsaufbau zwischen der Unter-Steuereinheit und der Zentral-Steuereinheit alle in der Unter-Steuereinheit zwischengespeicherte Daten an die Zentral-Steuereinheit weitergeleitet werden. Für nicht sofort weiterzuleitende Daten wird dadurch der separate Aufbau einer Verbindung gespart.

Ein ähnlicher Vorteil ergibt sich bei einer Ausführungsform der Erfindung, bei der die in einem Teleservice-Endgerät bereitgestellten Daten im Teleservice-Endgerät mittels einer dritten Tabelle dahingehend überprüft werden, ob sie sofort an eine Unter-Steuereinheit weitergeleitet oder im Teleservice-Endgerät zwischengespeichert werden. Durch das Sammeln und Zwischenspeichern nicht eiliger Meldungen, welche jedoch einem Benutzer zur Kenntnis gebracht werden müssen, kann eine Vielzahl von Einzel-Verbindungsaufbauten eingespart werden. Die im Teleservice-Endgerät zwischengespeicherten Daten können dahingehend überwacht werden, daß sie auf jeden Fall nach einer bestimmten Zeit weitergeleitet werden. So ist sichergestellt, daß auch Daten, welche nicht sofort weitergeleitet werden müssen, nach einer vorbestimmten Höchstzeit weitergeleitet werden.

Besonders vorteilhaft ist auch eine Ausführungsform der Erfindung, bei der die dritte Tabelle eine Vergleichstabelle umfaßt, mittels welcher in einem Teleservice-Endgerät zwischengespeicherte Daten einer dritten Bewertung unterzogen und in Abhängigkeit davon in einen beispielsweise nicht flüchtigen Speicherbereich für die Femübertragung bereitgestellt werden, eine Aktionstabelle umfaßt, mittels welcher festgelegt ist, unter welchen Umständen eine Verbindung von dem Teleservice-Endgerät zu einer betreffenden Unter-Steuereinheit vorgenommen wird, und eine Verbindungstabelle umfaßt, in welcher Verbindungswege zu den Unter-Steuereinheiten enthalten sind. Hierdurch lassen sich im Teleservice-Endgerät anfallende Daten sehr kostengünstig mit sehr hoher Sicherheit übertragen.

Als besonders vorteilhaft hat sich auch eine Ausführungsform der Erfindung herausgestellt, bei der mittels der zweiten Bewertung bestimmt wird, ob die von der zentralen Steuereinheit empfangenen Daten sofort an ein Benutzergerät weitergeleitet werden. Hierdurch ergibt sich eine nochmalige Einsparung von Verbindungsaufbauten. Denn, da an die Zentral-Steuereinheit die Daten aller Teleservice-Endgeräte geleitet werden, verwaltet die Zentral-Steuereinheit eine Vielzahl von Daten. Nicht sofort an ein Benutzergerät weiterzuleitende Daten werden erst dann an ein betreffendes Benutzergerät weitergeleitet, wenn die Zentral-Steuereinheit Daten empfangen hat, welche sofort an das Benutzergerät weitergeleitet werden müssen. Oder die Daten werden in der Zentral-Steuereinheit gespeichert, wobei sie vom Benutzergerät jederzeit abgerufen werden können. Durch die Sammlung der Daten wird die Anzahl der Verbindungsaufbauten sehr stark verringert. Außerdem können die in der Zentral-Steuereinheit gespeicherten Daten auf weitere Merkmale untersucht werden, wobei aufgrund des Untersuchungsergebnisses eine automatische Weiterleitung bestimmter Daten erfolgen kann.

Besonders vorteilhaft ist auch eine Ausführungsform der Erfindung, bei der die zweite Tabelle der Zentral-Steuereinheit und/oder die erste Tabelle der Unter-Steuereinheit und/oder die dritte Tabelle des Teleservice-Endgerätes mittels des Benutzergerätes generierbar beziehungsweise überschreibbar ist. Hierdurch läßt sich das System auf einfache Weise an veränderte Bedingungen anpassen. Fällt beispielsweise eine Unter-Steuereinheit aus, können die Tabellen der Endgeräte, welche diese Unter-Steuereinheit als erste ansprechen sollen, derart geändert werden, daß sie eine andere Unter-Steuereinheit als erste ansprechen. Dies wirkt sich besonders vorteilhaft auf die Zuverlässigkeit der Datenübertragung aus.

Besonders vorteilhaft ist jedoch eine Ausführungsform der Erfindung, bei der die Zentral-Steuereinheit einen ersten Speicherbereich hat, zum Empfang einer Fehlermeldung einer Unter-Steuereinheit, wobei aufgrund einer Fehlermeldung der Unter-Steuereinheit die dritten Tabellen betreffender Teleservice-Endgeräte überschrieben werden. Hierdurch ergibt sich derselbe Vorteil, wie zuvor beschrieben, jedoch werden die dritten Tabellen der betreffenden Teleservice-Endgeräte nicht auf Veranlassung eines Benutzers überschrieben sondern automatisch aufgrund einer Fehlermeldung einer Unter-Steuereinheit. Die Zentral-Steuereinheit erkennt hierbei auch den Totalausfall einer Unter-Steuereinheit.

Bei einer weiteren Ausführungsform der Erfindung ist vorgesehen, daß die Zentral-Steuereinheit einen zweiten Speicherbereich aufweist, zum Empfang einer Steueranweisung eines Benutzergerätes, mittels der ein betreffendes Teleservice-Endgerät zu einer Datenübermittlung veranlaßt wird. Hierdurch wird auf einfache Weise erreicht, daß Unbefugte nicht mit den Teleservice-Endgeräten in Verbindung treten können. Denn dadurch, daß die Benutzergeräte nur auf die Zentral-Steuereinheit zugreifen können, ist ein direkter Zugriff der Benutzergeräte auf die Teleservice-Endgeräte nicht möglich.

Bei der zuletzt beschriebenen Ausführungsform ist es besonders vorteilhaft, wenn die Teleservice-Endgeräte einen Eingang aufweisen, mittels dem sie zu einer Datenübermittlung aktivierbar sind, wobei die Aktivierung aufgrund der Steueranweisung eines Benutzergerätes erfolgt, oder aufgrund einer Anforderung der Zentral-Steuereinheit als Ergebnis einer Fehlermeldung.

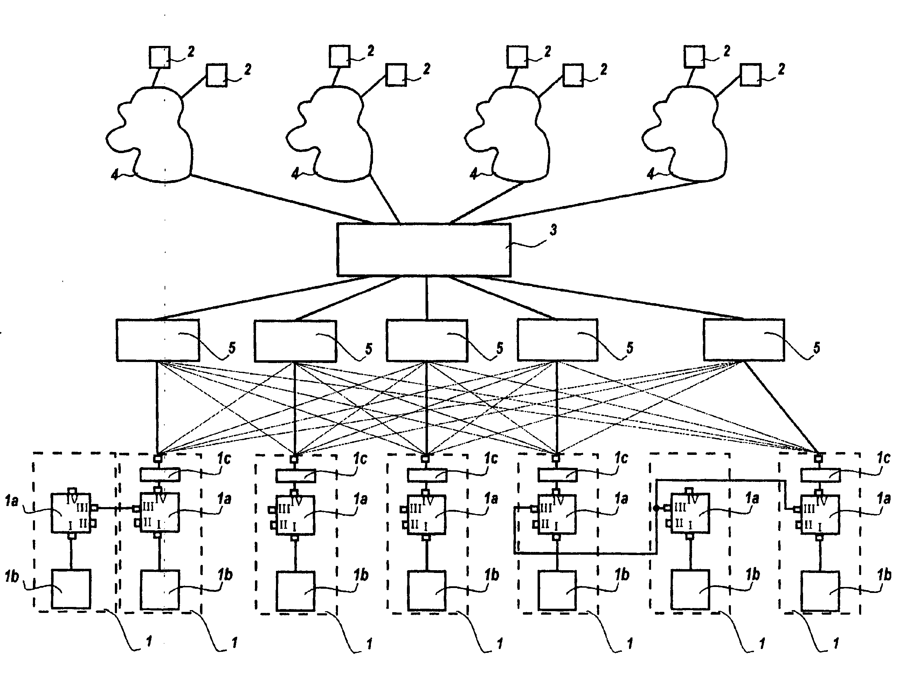

Weitere Einzelheiten, Merkmale und Vorteile der vorliegenden Erfindung ergeben sich aus der nachfolgenden Beschreibung eines besonderen Ausführungsbeispiels unter Bezugnahme auf die Zeichnung.

Es zeigt die einzige Figur ein erfindungsgemäßes System in schematischer Darstellung.

Wie der Figur entnommen werden kann, weist ein erfindungsgemäßes System eine Zentral-Steuereinheit 3 auf, mit welcher einerseits Unter-Steuereinheiten 5 verbunden sind. Andererseits ist die Zentral-Steuereinheit 3 mit öffentlichen Kommunikationsnetzen 4 verbunden. Die Kommunikationsnetze können beispielsweise das T-Net oder das ISDN-Netz der Deutschen Telekom oder das Internet sein. Es ist somit möglich, daß Endgeräte 2 der Kommunikationsnetze 4 mit der Zentral-Steuereinheit 3 in Verbindung treten.

Die Unter-Steuereinheiten 5 sind mit entfernten Geräten 1, welche jeweils aus einem Teleservice-Endgerät 1a und einem zu überwachenden Gerät 1 b bestehen, vermascht. Hierdurch lassen sich Verbindungen von einem entfernten Endgerät 1 mit mehreren Unter-Steuereinheiten 5 herstellen. Die Unter-Steuereinheiten 5 können auch untereinander vermascht sein, wodurch auch Verbindungen zwischen Unter-Steuereinheiten 5 hergestellt werden können.

Die Teleservice-Endgeräte 1a können als Ein-Platinen-Rechner mit flüchtigen und nicht flüchtigen Speicherbereichen und mehreren Schnittstellen ausgebildet sein. Eine erste Schnittstelle I dient zur Kommunikation mit dem zu überwachenden Gerät 1b, welches beispielsweise eine USV-Anlage sein kann. Über eine zweite Schnittstelle II wird die an dem zu überwachenden Gerät 1b belegte Schnittstelle wieder rekonstruiert, so daß ein Benutzer vor Ort nach wie vor mit dem zu überwachenden Gerät 1b kommunizieren kann, ohne die Verbindung zwischen dem zu überwachenden Gerät 1b und dem Teleservice-Endgerät 1a trennen zu müssen. In einer weiteren Betriebsart des Teleservice-Endgerätes 1a ist über die zweite Schnittstelle II auch eine Änderung der dritten Tabelle möglich.

Eine dritte Schnittstelle III am Teleservice-Endgerät 1a ist als Datenbus ausgeführt und ermöglicht die lokale Vernetzung mehrerer Teleservice-Endgeräte 1a zur Überwachung weiterer Anlagen am selben Standort.

Eine vierte Schnittstelle IV dient zum Anschluß eines Modems 1c.

In vorteilhafter Weise handelt es sich bei dem Teleservice-Endgerät 1a um eine selbständige Baugruppe mit eigenem Prozessor, die damit von dem zu überwachenden Gerät 1b unabhängig ist und auch die Meldung eines totalen Ausfalls des zu überwachenden Geräts 1b ermöglicht.

Wie der linken Seite der Figur zu entnehmen ist, kann ein zweites Teleservice-Endgerät 1a, welches mit einem zweiten zu überwachenden Gerät 1b verbunden ist, über die dritte Schnittstelle III mit einem anderen Teleservice-Endgerät 1a verbunden werden, wodurch ein Modem 1c eingespart werden kann.

Auf der rechten Seite der Figur ist alternativ eine andere Möglichkeit dargestellt, bei der drei Teleservice-Endgeräte 1a über die dritte Schnittstelle III miteinander vernetzt sind, wobei zwei der drei Teleservice-Endgeräte 1a ein Modem 1c aufweisen. Durch die Vernetzung ist es möglich, daß die vemetzten Teleservice-Endgeräte 1a über jedes der beiden Modem 1c mit Unter-Steuereinheiten 5 in Verbindung treten können. Dies wirkt sich besonders vorteilhaft auf die Zuverlässigkeit des Systems aus.

Ein Teleservice-Endgerät 1a steht über die erste Schnittstelle I, welche als serielle Schnittstelle ausgebildet sein kann, in ständiger Verbindung mit einem zu überwachenden Gerät 1b. Dabei werden die Betriebsdaten des zu überwachenden Geräts 1b, welches beispielsweise eine USV sein kann, über ein für diesen zu überwachenden Gerätetyp spezifisches Protokoll permanent vom Teleservice-Endgerät 1a gelesen und zwischengespeichert. Die zwischengespeicherten Daten werden mit Hilfe einer Vergleichstabelle einer Bewertung unterzogen und in Abhängigkeit davon in einem nicht flüchtigen Speicherbereich für die Fernübertragung bereitgestellt.

Ist zum Beispiel ein Temperaturwert des zu überwachenden Geräts 1b zu hoch, wird dies im Teleservice-Endgerät 1a durch Vergleich mit einem ersten Vorgabewert festgestellt. Der Temperaturwert wird dabei als kritisch markiert, mit einem Zeitstempel aus einer Uhr des Teleservice-Endgeräts 1a versehen und in den nicht flüchtigen Ausgangsspeicher übernommen. Steigt die Temperatur weiter und überschreitet einen zweiten Vorgabewert, wird der betreffende Temperaturwert als besonders kritisch markiert und mitsamt Zeitstempel im Ausgangsspeicher abgelegt.

Auch funktionale Zusammenhänge werden registriert und bewertet. Bricht zum Beispiel die Kommunikation zwischen einem Teleservice-Endgerät 1a und dem zu überwachenden Gerät 1b zusammen, so kann dieser Umstand nach einer vorbestimmten Zeit als kritisch und nach einer weiteren Zeit als besonders kritisch bewertet werden.

Eine Femkommunikationsroutine im Teleservice-Endgerät prüft ständig den Ausgangsspeicher und baut in Abhängigkeit von den Ergebnissen der Bewertung eine Verbindung zu einer Unter-Steuereinheit 5 auf. Die Femkommunikationsroutine bedient sich dazu einer Aktionstabelle, in der festgelegt ist, unter welchen Umständen eine Verbindung aufzubauen ist, sowie einer Verbindungstabelle, die die Verbindungswege zu den Unter-Steuereinheiten 5 enthält.

Die Aktionstabelle bestimmt beispielsweise, daß, wenn der Ausgangsspeicher einen als besonders kritisch markierten Temperaturwert enthält, eine Verbindung aufzubauen ist. Ebenso kann bestimmt werden, daß dann, wenn der Ausgangsspeicher einen Temperaturwert enthält, welcher als kritisch markiert ist, und gleichzeitig festgestellt wird, daß ein als kritisch bewerteter Zusammenbruch der Kommunikation zwischen dem Teleservice-Endgerät 1a und dem zu überwachenden Gerät 1b vorhanden ist, eine Verbindung aufgebaut wird. Auch kann mittels der Aktionstabelle bestimmt werden, daß bei Erreichen einer bestimmten Uhrzeit eine Verbindung auch ohne kritische Werte im Ausgangsspeicher aufgebaut wird. Außerdem kann eine Verbindung aufgebaut werden, wenn eine vorbestimmte Menge Daten im Ausgangsspeicher vorhanden ist. Ein weiterer Grund für einen Verbindungsaufbau ist immer ein Verbindungswunsch einer Unter-Steuereinheit 5 oder der Zentral-Steuereinheit 3, der von einem Teleservice-Endgerät 1a erkannt wird.

Die Femkommunikationsroutine baut eine Verbindung zu einer Unter-Steuereinheit 5 auf, in dem sie der Verbindungstabelle einen ersten Verbindungsweg entnimmt und über die vierte Schnittstelle IV des Teleservice-Endgeräts ein angeschlossenes Modem 1c zum Verbindungsaufbau zu der dem ersten Verbindungsweg entsprechenden Rufnummer veranlaßt. Kommt die Verbindung zu der gewählten Unter-Steuereinheit 5 zustande, wird der Unter-Steuereinheit 5 eine Identifikationsnummer des Teleservice-Endgerätes 1a genannt, ein der Aktionstabelle entsprechender Anrufgrund genannt, die Daten werden an die Unter-Steuereinheit 5 übermittelt, der erfolgreiche Empfang von dieser quittiert und die Verbindung vom Teleservice-Endgerät 1a wieder getrennt. Die übermittelten Datensätze werden von der Fernkommunikationsroutine im Ausgangsspeicher entsprechend markiert und die Aktion als erfolgreich beendet bewertet. Die Femkommunikationsroutine ist damit wieder im Ausgangszustand.

Kommt die Verbindung gemäß dem ersten Verbindungsweg nicht zustande, zum Beispiel weil der entsprechende Anschluß der Unter-Steuereinheit 5 belegt ist, werden weitere Verbindungswege versucht, vorzugsweise zu derselben Unter-Steuereinheit 5. Sind auch diese nicht erfolgreich, zum Beispiel weil die gesamte Unter-Steuereinheit 5 gestört ist, werden weitere Verbindungsversuche an eine andere Unter-Steuereinheit 5 gerichtet, bis eine Verbindung zustande kommt.

Sind mehrere Teleservice-Endgeräte 1a lokal vemetzt und haben mindestens zwei einen Zugang zu einem Kommunikationsnetz, kann der Verbindungswunsch auch unter den Teleservice-Endgeräten 1a weitergegeben werden. Ist zum Beispiel der analoge Telefonanschluß auf den ein Teleservice-Endgerät 1a zugreift, wegen Ausfall der Telefonanlage gestört, kann der Verbindungswunsch über ein zweites Teleservice-Endgerät 1a über eine ISDN-Leitung oder über ein drittes Teleservice-Endgerät 1a mittels Mobilfunkzugang realisiert werden, um dadurch die Daten des ersten Teleservice-Endgeräts 1a an eine erreichbare Unter-Steuereinheit 5 zu übermitteln.

Die von der Unter-Steuereinheit 5 empfangenen Daten können von dieser zwischengespeichert werden oder sofort an die Zentral-Steuereinheit 3 übertragen werden. Dies wird von der Unter-Steuereinheit 5 in Abhängigkeit von dem vom Teleservice-Endgerät 1a genannten Anrufgrund entschieden. Enthalten die Daten zum Beispiel besonders kritische Werte, so ist der Anruf mit einem entsprechenden Merkmal gemäß der Aktionstabelle des Teleservice-Endgeräts 1a markiert und wird sofort weitergeleitet. Die Daten eines Routineanrufs des Teleservice-Endgeräts 1a zu einer bestimmten Uhrzeit können jedoch von der Unter-Steuereinheit 5 zwischengespeichert werden, um sie zusammen mit den Daten anderer Teleservice-Endgeräte 1a in einem größeren Datenpaket an die Zentral-Steuereinheit 3 zu übertragen.

Die Zentral-Steuereinheit 3 stellt die Verbindung zwischen der Unter-Steuereinheit 5 und den von den Benutzergeräten 2 verwendeten Kommunikationsnetzen 4 dar. Die Aufgabe der Zentral-Steuereinheit 3 besteht darin, sowohl die Daten, die von den Teleservice-Endgeräten 1a über die Unter-Steuereinheit 5 eingehen, als auch jene, die von den Benutzergeräten 2 eingegeben und über die Kommunikationsnetze 4 übermittelt werden, zu speichern, zu bewerten und zu bearbeiten, so daß ein automatischer Informationsaustausch zwischen den Teleservice-Endgeräten 1a und den Benutzergeräten 2 möglich ist, ohne daß diese in direkte Verbindung zueinander treten.

Die Zentral-Steuereinheit 3 verfügt über entsprechende Zugänge zu den Kommunikationsnetzen 4, wie beispielsweise analoges und digitales Femsprechnetz, Mobilfunknetze oder ein öffentliches Datennetz wie beispielsweise ein IP-Netz. Die grafisch geführte Interaktion mit dem Benutzer wird beispielsweise über das Internet realisiert, die Ausgabe von Störmeldungen kann wahlweise über e-Mail, Fax oder Mobilfunk (SMS) erfolgen. Einfache Eingaben des Benutzers, wie beispielsweise Quittieren einer Störmeldung, können ebenfalls über Telefon oder Mobilfunk erfolgen.

Die Zentral-Steuereinheit 3 läßt sich in mehrere unterschiedliche Aufgabenbereiche untergliedern. So kann die Zentral-Steuereinheit 3 eine Benutzerverwaltung, eine Endgeräte-Verwaltung, eine Rechteverwaltung, einen Endgeräte-Datenbereich und eine Uhr umfassen.

Für die Benutzerverwaltung verfügt die Zentral-Steuereinheit 3 über Speicherbereiche, auf die der Benutzer über Formulare zugreifen kann um persönliche Daten wie beispielsweise die Rufnummer seines Mobiltelefons, seine Faxnummer oder seine e-Mail Adresse einzugeben.

Für die Endgeräte-Verwaltung verfügt die Zentral-Steuereinheit 3 über Speicherbereiche, auf die der Benutzer beispielsweise über in der Zentral-Steuereinheit 3 hinterlegte Formulare zugreifen kann, um das Teleservice-Endgerät 1a beziehungsweise das zu überwachende Gerät 1b betreffende Daten einzugeben, wie beispielsweise die Rufnummer des Modem-Anschlusses, das Land, in dem das zu überwachende Gerät 1b betrieben wird, den Typ des zu überwachenden Geräts 1b und so weiter. Außerdem wird hier eine Auswahl getroffen, auf welchem Benutzergerät 2 eine eventuelle Störmeldung eines entfernten Geräts 1 ausgegeben werden soll. Des weiteren wird definiert, unter welchen Umständen überhaupt Meldungen erzeugt werden sollen. Die Zentral-Steuereinheit 3 ändert dann automatisch die entsprechenden Tabellen in den Unter-Steuereinheiten 5 und den Teleservice-Endgeräten 1a.

Für die Rechteverwaltung verfügt die Zentral-Steuereinheit 3 über Speicherbereiche, auf die bestimmte Benutzer über Formulare zugreifen zu können, um Zugriffsrechte für untergeordnete Benutzer festzulegen. So kann beispielsweise eingestellt werden, daß ein Servicemitarbeiter nur die Meßwerte einer bestimmten Gruppe von zu überwachenden Geräten einsehen kann, ein technischer Leiter hingegen die Vergleichstabellen, mit Hilfe derer das Teleservice-Endgerät 1a die Bewertung der Meßwerte vornimmt, ändern darf.

Für den Endgeräte-Datenbereich verfügt die Zentral-Steuereinheit 3 über Speicherbereiche, in denen die Daten der entfernten Geräte 1 fortlaufend gespeichert werden, um beispielsweise Langzeitanlaysen zu ermöglichen.

In der Zentral-Steuereinheit 3 befindet sich auch eine zentrale Uhr, mittels welcher sich in den Unter-Steuereinheiten 5 befindliche Uhren sowie bei jeder Verbindung zu den Teleservice-Endgeräten 1a, in den Teleservice-Endgeräten 1 a befindliche Uhren synchronisiert werden können.

Nachfolgend wird die Kommunikation innerhalb des erfindungsgemäßen Systems anhand von drei Beispielen beschrieben.

### Erstes Beispiel: Benachrichtigung eines Benutzers

Die Daten eines entfernten Gerätes 1 werden in der Zentral-Steuereinheit 3 mit Hilfe der vom Benutzer definierten Vorgaben bewertet und in Abhängigkeit davon an ein Benutzergerät 2 weitergeleitet. So kann der Benutzer über sein Mobiltelefon als Benutzergerät 2 eine Kurznachricht erhalten, wenn an seinem zu überwachenden Gerät 1 b beispielsweise die Temperatur den im betreffenden Teleservice-Endgerät 1 a gespeicherten Vergleichswert überschreitet.

Der Benutzer kann aber auch die Meßwerte beispielsweise von zwölf Uhr aber auch per e-Mail bekommen. Hierzu muß er nur zuvor durch Eintragung der Uhrzeit in ein entsprechendes Formular der Zentral-Steuereinheit 3 diese automatisch dazu anregen, über die Unter-Steuereinheit 5 dem betreffenden Teleservice-Endgerät 1a einen Verbindungswunsch zu signalisieren und in der anschließend vom Teleservice-Endgerät 1a zur Unter-Steuereinheit 5 aufgebauten Verbindung in die Vergleichstabelle des Teleservice-Endgeräts 1a die entsprechende Uhrzeit einzutragen. Bei Übermittlung des Verbindungswunsches der Zentral-Steuereinheit 3 an die Unter-Steuereinheit 5 kann an die Unter-Steuereinheit 5 auch der von der Unter-Steuereinheit 5 in die Tabelle des Teleservice-Endgerätes 1a einzutragende Wert mit übermittelt werden.

### Zweites Beispiel: Der Rückkanal zum Benutzergerät

Der Benutzer gibt in einem Formular, welches die Zentral-Steuereinheit 3 über das Kommunikationsnetz 4 an das betreffende Benutzergerät 2, beispielsweise einen Personal-Computer mit Browser sendet an, daß er beispielsweise eine Störmeldung quittieren, und damit beispielsweise eine Hupe, die an dem betreffenden entfernten Gerät 1 eine Störung akustisch signalisiert, abschalten möchte. Das ausgefüllte Formular wird dann an die Zentral-Steuereinheit 3 zurück gesendet. Diese entnimmt ihrem Endgeräte-Bereich die entsprechende Rufnummer des Teleservice-Endgeräts 1a und übermittelt diesen Auftrag an die Unter-Steuereinheit 5, die in der Verbindungstabelle des Teleservice-Endgeräts 1a an erster Stelle steht. Die Unter-Steuereinheit 5 signalisiert dem Teleservice-Endgerät 1a einen Verbindungswunsch, durch Anwählen der Rufnummer des Teleservice-Endgerätes 1a. Das Teleservice-Endgerät 1a erkennt den Verbindungswunsch durch Auswerten der Rufinformation an seiner vierten Schnittstelle IV und ruft die Unter-Steuereinheit 5 zurück. Jetzt kommt die Verbindung zustande und die Unter-Steuereinheit 5 fordert das Teleservice-Endgeräte 1a auf, die Hupe abzuschalten.

Nach Prüfung der Berechtigung quittiert das Teleservice-Endgerät 1a die Anforderung und beendet die Verbindung, wobei das positive Quittungssignal von der Unter-Steuereinheit 5 an die Zentral-Steuereinheit 3 zeitverzögert gesendet wird. Jetzt wird der entsprechende Befehl vom Teleservice-Endgerät 1a an das zu überwachende Gerät 1b weitergegeben, und die Hupe verlöscht.

Sollte die Hupe nicht verlöschen, erkennt das Teleservice-Endgerät 1a dies durch Bewertung der Rückmeidung von dem zu überwachenden Gerät 1b, baut eine Verbindung zur Unter-Steuereinheit 5 auf und setzt eine entsprechende Fehlermeldung ab. Empfängt die Unter-Steuereinheit 5 die Fehlermeldung bevor sie ein positives zeitverzögertes Quittungssignal an die Zentral-Steuereinheit 3 gesendet hat, unterdrückt sie das positive Quittungssignal und sendet lediglich das negative Quittungssignal an die Zentral-Steuereinheit 3. Von der Zentral-Steuereinheit 3 kann dann die Benutzereingabe positiv oder negativ zum Benutzer hin quittiert werden.

### Drittes Beispiel: Erstinbetriebnahme eines Teleservice-Endgeräts

Aufgrund der vom Benutzer über ein Benutzergerät 2 und das Kommunikationsnetz 4 an die Zentral-Steuereinheit 3 übermittelten Daten, und der in der Zentral-Steuereinheit 3 hinterlegten weiteren Daten wird von dieser die konkrete Verbindungstabelle, die Vergleichstabelle und die Aktionstabelle für das Teleservice-Endgerät 1a erzeugt und als Initialisierungsauftrag an eine Unter-Steuereinheit 5 übertragen. Der Initialisierungsauftrag kann außerdem die Kommunikationsroutine enthalten, die vom Teleservice-Endgerät 1a genutzt wird, um mit dem zu überwachenden Gerät 1b zu kommunizieren.

Die Unter-Steuereinheit 5 initialisiert das Teleservice-Endgerät 1a, indem sie die Rufnummer des Teleservice-Endgeräts 1a wählt, eine Verbindung aufbaut, die eindeutige Seriennummer des Teleservice-Endgeräts 1a abfragt, die Tabellen während dieser Verbindung in die entsprechenden Speicherbereiche in die Teleservice-Endgeräte 1a überträgt und die Verbindung wieder trennt. Die Unter-Steuereinheit 5 quittiert diesen Vorgang zur Zentral-Steuereinheit 3 durch Übermittlung eines Datensatzes, der ersten Quittung, der mindestens die Rufnummer des Teleservice-Endgeräts 1a und dessen Seriennummer enthält.

Das Teleservice-Endgerät 1a prüft die Tabellen und baut nun seinerseits eine Verbindung zu einer Unter-Steuereinheit 5 auf. Ist diese Verbindung erfolgreich, so wird der korrekte Datenaustausch mit der Unter-Steuereinheit 5 von dieser an das Teleservice-Endgerät 1a quittiert, woraufhin sich das Teleservice-Endgerät 1a verriegelt. Ab diesem Zeitpunkt läßt das Teleservice-Endgerät 1a keinen Verbindungsaufbau von außen mehr zu und nimmt die Kommunikation mit dem zu überwachenden Gerät 1b auf. Eine Kopie der Quittung wird von der Unter-Steuereinheit 5 an die Zentral-Steuereinheit 3 übermittelt. Durch die Übermittlung zusammen mit der ersten Quittung wird die Zentral-Steuereinheit 3 dazu veranlaßt, einen Endgeräte-Datenbereich für das entfernte Gerät 1 zu erzeugen, und dies zum betreffenden Benutzergerät 2 zu quittieren.

Ist das Teleservice-Endgerät 1a beispielsweise wegen eines Fehlers in der Verbindungstabelle nicht in der Lage, innerhalb einer vorgegebenen Anzahl von Versuchen eine Unter-Steuereinheit 5 zu erreichen, so verwirft das Teleservice-Endgerät 1a die empfangenen Tabellen und ist für eine erneute Initialisierung bereit.

Durch das Ausbleiben einer positiven Quittung oder bei Empfang einer negativen Quittung der Unter-Steuereinheit 5 erkennt die Zentral-Steuereinheit 3 einen Fehlerzustand und kann beispielsweise die Initialisierung mit geänderten Tabellen wiederholen oder durch eine Meldung an ein Benutzergerät 2 den Benutzer über den erkannten Fehler informieren.

## Patentansprüche

1. Verfahren zum Austausch von Daten in einem Netzwerk, mit wenigstens einem entfernten Gerät (1), welches ein zu überwachendes Gerät (1b), ein Teleservice-Endgerät (1a) und ein Modem (1c) zum Anschluß des Teleservice-Endgeräts (1a) an ein öffentliches Telefonnetz aufweist, wenigstens einem Benutzergerät (2), welches mit dem Teleservice-Endgerät (1a) Daten austauschen kann, und einer Zentral-Steuereinheit (3), welche wenigstens einen Zugang zu einem öffentlichen Kommunikationsnetz (4) hat, und mit einem der Benutzergeräte (2), welches ein Endgerät des Kommunikationsnetzes (4) sein kann, verbunden ist, und wenigstens eine Unter-Steuereinheit (5) vorhanden ist, welche einerseits mit dem Teleservice-Endgerät (1a) und andererseits mit der Zentral-Steuereinheit (3) verbunden ist, wobei das Teleservice-Endgerät (1a) auf Grund eines Ereignisses entsprechende vorbestimmte Daten an eine der Unter-Steuereinheiten (5) übermittelt, welche jeweils eine erste Tabelle aufweist, mittels der eine erste Bewertung der Daten stattfindet, die Daten in Abhängigkeit der ersten Bewertung an die Zentral-Steuereinheit (3) weitergeleitet werden, und in der Zentral-Steuereinheit (3) mittels einer zweiten Tabelle eine zweite Bewertung stattfindet, auf Grund der die Daten an ein vorbestimmtes Benutzergerät (2) weitergeleitet werden, sowie die in einem Teleservice-Endgerät (1a) bereitgestellten Daten im Teleservice-Endgerät (1a) mittels einer dritten Tabelle dahingehend überprüft werden, ob sie sofort an eine Unter-Steuereinheit (5) weitergeleitet oder im Teleservice-Endgerät (1a) zwischengespeichert werden, und die dritte Tabelle eine Vergleichstabelle umfaßt, mittels welcher im Teleservice-Endgerät (1a) zwischengespeicherte Daten einer dritten Bewertung unterzogen und in Abhängigkeit davon in einem Speicherbereich für die Femübertragung bereitgestellt werden, eine Aktionstabelle umfaßt, mittels welcher festgelegt wird, unter welchen Umständen eine Verbindung von dem Teleservice-Endgerät (1a) zu einer betreffenden Unter-Steuereinheit (5) vorgenommen wird, und eine Verbindungstabelle umfaßt, in welcher Verbindungswege zu den Unter-Steuereinheiten (5) enthalten sind.

2. Verfahren nach Anspruch 1,
**dadurch gekennzeichnet, daß** mittels der ersten Bewertung bestimmt wird, ob die Daten sofort an die Zentral-Steuereinheit (3) weitergeleitet oder in der Unter-Steuereinheit (5) zwischengespeichert werden.

3. Verfahren nach Anspruch 2,
**dadurch gekennzeichnet, daß** bei einer sofortigen Weiterleitung der Daten, alle in der Unter-Steuereinheit (5) zwischengespeicherten Daten weitergeleitet werden.

4. Verfahren nach einem der Ansprüche 1 bis 3,
**dadurch gekennzeichnet, daß** mittels der zweiten Bewertung bestimmt wird, ob die von der Zentral-Steuereinheit (3) empfangenen Daten sofort an ein Benutzergerät (2) weitergeleitet werden.

5. Verfahren nach Anspruch 4,
**dadurch gekennzeichnet, daß** mittels der zweiten Tabelle der Zentral-Steuereinheit (3) auch festgelegt ist, an welches Benutzergerät (2) die Daten bei einer sofortigen Weiterleitung der Daten übermittelt werden sollen.

6. Verfahren nach einem der Ansprüche 1 bis 5,
**dadurch gekennzeichnet, daß** die zweite Tabelle der Zentral-Steuereinheit (3) und/oder die erste Tabelle der Unter-Steuereinheit (5) und/oder die dritte Tabelle des Teleservice-Endgerätes (1a) mittels des Benutzergerätes (2) generierbar beziehungsweise überschreibbar ist.

7. Verfahren nach einem der Ansprüche 1 bis 6,
**dadurch gekennzeichnet, daß** die Zentral-Steuereinheit (3) einen ersten Speicherbereich hat, zum Empfang einer Fehlermeldung einer Unter-Steuereinheit (5), wobei auf Grund einer Fehlermeldung der Unter-Steuereinheit (5) die dritten Tabellen betreffender Teleservice-Endgeräte (1a) überschrieben werden.

8. Verfahren nach einem der Ansprüche 1 bis 7,
**dadurch gekennzeichnet, daß** die Zentral-Steuereinheit (3) einen zweiten Speicherbereich aufinreist, zum Empfang einer Steueranweisung eines Benutzergerätes (2), mittels der ein betreffendes Teleservice-Endgerät (1a) zu einer Datenübermittlung veranlaßt wird.

9. Verfarhen nach Anspruch 8,
**dadurch gekennzeichnet, daß** die Teleservice-Endgeräte (1a) einen Eingang aufweisen, mittels dem sie zu einer Datenübermittlung aktivierbar sind.

10. System mit Mitteln zur Durchführung aller Schritte eines Verfahrens nach einem der Ansprüche 1 bis 9.

## Claims

1. Method of exchanging data on a network having at least one remote device (1) which remote device (1) has a device (1b) to be monitored, a remote service terminal (1a) and a modem (1c) for connecting the remote service terminal (1a) to a public telephone network, having at least one user device (2) which is able to exchange data with the remote service terminal (1a), and having a central control unit (3) which has at least one access point to a public communications network (4), and which is connected to one of the user devices (2), which may be a terminal of the communications network (4), and there is at least one sub-control-unit (5) which is connected on the one hand to the remote service terminal (1a) and on the other hand to the central control unit (3), the remote service terminal (1a) transmitting, in response to an event, corresponding predetermined data to one of the sub-control-units (5), which sub-control-unit (5) has a first table by means of which a first evaluation of the data is performed, the data being passed on to the central control unit (3) as a function of the first evaluation, and a second evaluation is performed in the central control unit (3) by means of a second table, in response to which second evaluation the data is passed on to a predetermined user device (2), and the data made available in a remote service terminal (1a) is checked in the remote service terminal (1a) by means of a third table for whether it will be passed on at once to a sub-control-unit (5) or will be buffer-stored in the remote service terminal (1a), and the third table comprises a comparison table by means of which data buffer-stored in the remote service terminal (1a) is subjected to a third evaluation and is made available, as a function thereof, in a memory area for remote transmission, and the third table comprises an action table by means of which it is laid down under what circumstances a connection is made from the remote service terminal (1a) to a sub-control-unit (5) concerned, and the third table comprises a connection table in which are contained paths of connection to the sub-control-units (5).

2. Method according to claim 1, **characterised in that** it is determined by means of the first evaluation whether the data will be passed on to the central control unit (3) at once or will be buffer-stored in the sub-control-unit (5).

3. Method according to claim 2, **characterised in that**, when the data is passed on at once, all the data buffer stored in the sub-control-unit (5) is passed on.

4. Method according to one of claims 1 to 3, **characterised in that** it is determined by means of the second evaluation whether the data received by the central control unit (3) will be passed on at once to a user device (2).

5. Method according to claim 4, **characterised in that** it is also laid down by means of the second table in the central control unit (3) which user device (2) the data is to be passed on to when it is passed on at once.

6. Method according to one of claims 1 to 5, **characterised in that** the second table in the central control unit (3) and/or the first table in the sub-control-unit (5) and/or the third table in the remote service terminal (1a) can be generated or over-written by means of the user device (2).

7. Method according to one of claims 1 to 6, **characterised in that** the central control unit (3) has a first memory area for receiving an error message from a sub-control-unit (5), the third tables in remote service terminals (1a) concerned being over-written in response to an error message.

8. Method according to one of claims 1 to 7, **characterised in that** the central control unit (3) has a second memory area for receiving a control instruction from a user device (2), by means of which a remote service terminal (1a) concerned is caused to make a transmission of data.

9. Method according to claim 8, **characterised in that** the remote service terminals (1a) have an input by means of which they can be activated to make a transmission of data.

10. System having means for performing all the steps of a method according to one of claims 1 to 9.

## Revendications

1. Procédé pour l'échange de données dans un réseau, avec au moins un dispositif éloigné (1) qui présente un dispositif à surveiller (1b), un dispositif terminal de téléservice (1a) et un modem (1c) pour le raccordement du dispositif terminal de téléservice (1a) à un réseau téléphonique public, avec au moins un dispositif utilisateur (2) qui peut échanger des données avec le dispositif terminal de téléservice (1a), et avec une unité de commande centrale (3) qui a au moins un accès à un réseau de communication public (4) et qui est reliée à un des dispositifs utilisateurs (2) qui peut être un dispositif terminal du réseau de communication (4), et présentant au moins une sous-unité de commande (5) qui est reliée d'une part au dispositif terminal de téléservice (1a) et d'autre part à l'unité de commande centrale (3), procédé dans lequel le dispositif terminal de téléservice (1a) transmet en réponse à un événement des données prédéterminées correspondantes à une des sous-unités de commande (5), laquelle présente chaque fois une première table au moyen de laquelle on effectue une première évaluation des données, les données sont transmises à l'unité de commande centrale (3) en fonction de la première évaluation et on effectue dans l'unité de commande centrale (3), au moyen d'une deuxième table, une deuxième évaluation sur la base de laquelle les données sont transmises à un dispositif utilisateur (2) prédéterminé, les données mises à disposition dans un dispositif terminal de téléservice (1a) étant vérifiées dans le dispositif terminal de téléservice (1a) au moyen d'une troisième table afin de déterminer si elles doivent être transmises immédiatement à une sous-unité de commande (5) ou temporairement stockées dans le dispositif terminal de téléservice (1a), et la troisième table comprenant une table de comparaison au moyen de laquelle les données temporairement stockées dans le dispositif terminal de téléservice (1a) sont soumises à une troisième évaluation et, en fonction de celle-ci, mises à disposition dans une zone de mémoire pour la télétransmission, comprenant une table d'action au moyen de laquelle on détermine dans quelles circonstances une connexion doit être établie entre le dispositif terminal de téléservice (1a) et une sous-unité de commande (5) concernée, et comprenant une table de connexion contenant des chemins de connexion vers les sous-unités de commande (5).

2. Procédé selon la revendication 1,
**caractérisé par le fait que** l'on détermine au moyen de la première évaluation si les données doivent être transmises immédiatement à l'unité de commande centrale (3) ou temporairement stockées dans la sous-unité de commande (5).

3. Procédé selon la revendication 2,
**caractérisé par le fait qu'**en cas de transmission immédiate des données, toutes les données temporairement stockées dans la sous-unité de commande (5) sont transmises.

4. Procédé selon l'une des revendications 1 à 3,
**caractérisé par le fait que** l'on détermine au moyen de la deuxième évaluation si les données reçues par l'unité de commande centrale (3) doivent être transmises immédiatement à un dispositif utilisateur (2).

5. Procédé selon la revendication 4,
**caractérisé par le fait que** l'on détermine aussi au moyen de la deuxième table de l'unité de commande centrale (3) à quel dispositif utilisateur (2) les données doivent être transmises en cas de transmission immédiate des données.

6. Procédé selon l'une des revendications 1 à 5,
**caractérisé par le fait que** la deuxième table de l'unité de commande centrale (3) et/ou la première table de la sous-unité de commande (5) et/ou la troisième table du dispositif terminal de téléservice (1a) peuvent être générées ou réécrites au moyen du dispositif utilisateur (2).

7. Procédé selon l'une des revendications 1 à 6,
**caractérisé par le fait que** l'unité de commande centrale (3) présente une première zone de mémoire prévue pour recevoir un message d'erreur d'une sous-unité de commande (5), les troisièmes tables des dispositifs terminaux de téléservice (1a) concernés étant réécrites sur la base d'un message d'erreur de la sous-unité de commande (5).

8. Procédé selon l'une des revendications 1 à 7,
**caractérisé par le fait que** l'unité de commande centrale (3) présente une deuxième zone de mémoire prévue pour recevoir une instruction de commande d'un dispositif utilisateur (2) au moyen de laquelle on déclenche une transmission de données du dispositif terminal de téléservice (1a) concerné.

9. Procédé selon la revendication 8,
**caractérisé par le fait que** les dispositifs terminaux de téléservice (la) présentent une entrée au moyen de laquelle on peut activer une transmission de données.

10. Système avec des moyens pour réaliser toutes les étapes d'un procédé selon l'une des revendications 1 à 9.
